# DEMANDE DE BREVET EUROPEEN

(11) **EP 1 227 340 A1**
(43) Date de publication de la demande: **31.07.2002**
(21) Numéro de dépôt: 02290187.0
(22) Date de dépôt: 28.01.2002
(51) Int. Cl.: G01S 13/95, G01S 7/298, G01S 7/292

(54) **Procédé de détection radar**

(30) Priorité: 30.01.2001 FR 0101223
(71) Demandeur: METEO-FRANCE, 75340 Paris Cédex 07 (FR)
(72) Inventeur: Parent du Chatelet, Jacques, 75015 Paris (FR); Roquain, Patrick, 78440 Issou (FR)
(74) Mandataire: Lavialle, Bruno

(57) **Abrégé**

L'invention concerne un procédé de détection d'obstacles par au moins un système radar qui est associé à un repère polaire centré sur le système radar et est agencé pour émettre des impulsions et pour, lorsqu'une impulsion est réfléchie par au moins un obstacle, fournir un signal correspondant. Le procédé comprend l'étape d'établir dans une grille de projection, selon un repère différent du repère polaire du système radar, une représentation d'au moins une suite de valeurs qui sont liées au signal fourni par le système radar et correspondent à au moins un azimut et une distance au système radar dans le repère polaire de celui-ci. L'établissement de la représentation comprend une phase d'affecter chaque valeur à une cellule correspondante de la grille de projection et une phase de calculer une moyenne des valeurs affectées à chaque cellule.

## Description

La présente invention concerne un procédé de détection d'obstacles, en particulier des phénomènes météorologiques comme des précipitations, au moyen d'un système radar.

Les procédés de ce type ont pour but la réalisation d'une représentation des précipitations dans une grille cartésienne pour constituer par exemple une image qui peut être affichée en superposition à une carte géographique.

Les systèmes radar utilisés pour la mise en oeuvre de tels procédés comprennent généralement une antenne pivotante agencée pour émettre à intervalles réguliers des ondes électromagnétiques sous la forme d'une impulsion de durée déterminée. Les impulsions étant émises pendant la rotation de l'antenne, elles sont émises selon des directions différentes (formant un angle appelé azimut avec une direction de référence) de manière à balayer toute la zone entourant le système radar.

Lorsqu'une impulsion rencontre un obstacle, tout ou partie de l'impulsion est renvoyé vers l'antenne sous la forme d'une onde réfléchie qui est captée par l'antenne et transformée par le système radar en un signal numérique comportant une suite de valeurs qui sont généralement représentatives de niveaux d'intensité de l'onde réfléchie. Chaque valeur peut être associée à l'azimut de l'impulsion et à une distance au système radar qui est égale à la moitié de la distance que peut parcourir une onde électromagnétique pendant la durée comprise entre le début de l'émission de l'impulsion et le début de la réception de la partie de l'onde réfléchie correspondant à la valeur en question.

Chacune de ces valeurs correspond donc à une cellule d'une grille polaire qui peut être associée à un repère polaire centré sur le système radar et qui est divisée en cellules dont le pas radial est égal au pouvoir séparateur en distance du système radar et le pas angulaire est égal au décalage angulaire entre deux impulsions successives. Or, la taille de ces cellules croît à mesure que l'on s'éloigne de l'origine du repère et ne correspond pas à la taille des cellules de la grille cartésienne qui est utilisée pour l'affichage.

Pour améliorer la qualité des mesures radar, et aussi limiter la quantité de l'information à traiter, on effectue des moyennes sur des signaux correspondant à des impulsions ou à des distances successives. Dans les procédés de type connu, ces moyennes sont effectuées de manière à obtenir une grille polaire correspondant à une image dont la résolution à une distance moyenne est comparable à la résolution de l'image correspondant à la grille cartésienne souhaitée.

Par la suite, des traitements sont effectués sur le signal moyen ainsi obtenu et en particulier dans le cas des radars météorologiques, un calculateur extrait de ce signal moyen des écarts-types utilisés pour élaborer un signal de correction additionné au signal moyen afin d'éliminer les parties de ce signal moyen qui correspondent à des échos fixes qui ne sont pas de nature météorologique (on sait en effet que les reliefs naturels ou artificiels étant fixes, ils correspondent toujours à des cellules pour lesquelles l'intensité va peu varier de sorte que l'écart-type correspondant est faible alors que les phénomènes météorologiques sont variables de sorte que l'intensité au niveau des cellules traversées par de tels phénomènes varie beaucoup et l'écart-type est plus élevé pour celles-ci). Il est ainsi obtenu un signal corrigé constitué d'une suite de valeurs corrigées qui sont représentatives de niveaux d'intensité d'échos de précipitations et correspondent à des cellules de la grille polaire précitée.

L'étape suivante consiste à projeter le signal corrigé dans la grille cartésienne en calculant dans le repère cartésien les coordonnés du centre de la cellule polaire correspondant à chaque valeur corrigée. Il arrive qu'une valeur corresponde à une cellule de la grille cartésienne à laquelle une valeur a déjà été affectée, la valeur finalement affectée à cette cellule est alors la plus élevée. Il est en outre parfois nécessaire de recourir à des interpolations pour déduire si une valeur doit être affectée à certaines cellules vides de la grille cartésienne et par exemple des cellules vides isolées au milieu de cellules auxquelles ont été affectées des valeurs relativement élevées.

L'obtention du signal traité suivi de la projection de celui-ci dans la grille cartésienne provoque une distorsion de l'information par rapport au signal initialement fourni par le système radar et par exemple une atténuation de certaines valeurs d'échos (nous appelons écho la représentation d'un obstacle sur une image radar), ainsi qu'un décalage et un étalement de celles-ci sur plusieurs cellules. Des échos très intenses et très localisés, tels que ceux correspondant à un orage de pluie ou de grêle, risquent alors d'être perçus comme des phénomènes plus étendus et moins intenses

En outre, il est fréquent que la vitesse de rotation de l'antenne ne soit pas régulière, notamment lorsque l'antenne est dans une zone ventée sans être à l'abri d'un radôme. Le groupement des suites de valeurs correspondant à un nombre donné d'impulsions successives ne porte alors pas exactement sur les mêmes azimuts d'un tour d'antenne à l'autre. Il se produit lors de la visualisation des oscillations des échos, et en particulier des échos fixes lorsqu'il n'a pas été procédé à une élimination totale de ceux-ci, tant au niveau de leur localisation que de leur intensité d'une image à l'autre.

Il serait donc intéressant de disposer d'un procédé de détection d'obstacles par radar qui soit simple et permette une détection précise et fiable.

A cet effet, on prévoit selon l'invention, un procédé de détection d'obstacles par au moins un système radar qui est associé à un repère polaire centré sur le système radar et est agencé pour émettre des impulsions et pour, lorsqu'une impulsion est réfléchie par au moins un obstacle, fournir un signal correspondant, le procédé comprenant l'étape d'établir, dans une grille de projection selon un repère différent du repère polaire du système radar, une représentation d'au moins une suite de valeurs qui sont liées au signal fourni par le système radar et correspondent à au moins un azimut et une distance au système radar dans le repère polaire de celui-ci, l'établissement de la représentation comprenant une phase d'affecter chaque valeur à une cellule correspondante de la grille de projection et une phase de calculer une moyenne des valeurs affectées à chaque cellule.

Ainsi, il n'est réalisé pratiquement aucun groupement des suites de valeurs pour calculer des moyennes avant leur représentation dans la grille de projection. La représentation est dès lors précise en ce sens qu'elle est fidèle, à la projection près, au signal fourni par le système radar. En outre, le procédé peut être mis en oeuvre par un programme informatique ayant une structure simple rendant sa maintenance aisée.

D'autres caractéristiques et avantages de l'invention ressortiront à la lecture de la description qui suit d'un mode de mise en oeuvre particulier non limitatif de l'invention.

Il sera fait référence aux dessins annexés, parmi lesquels :

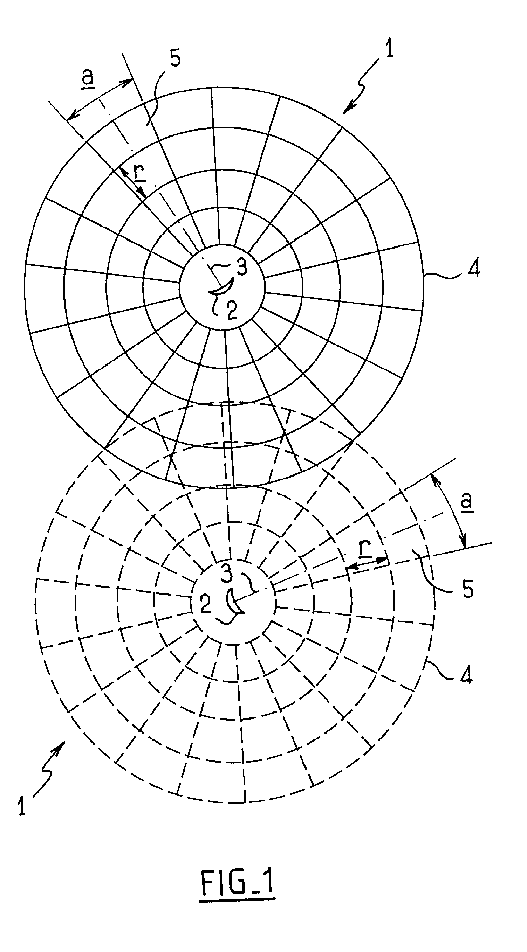

- la figure 1 est une vue schématique de la couverture géographique de systèmes radars utilisés pour la mise en oeuvre du procédé conforme à l'invention,

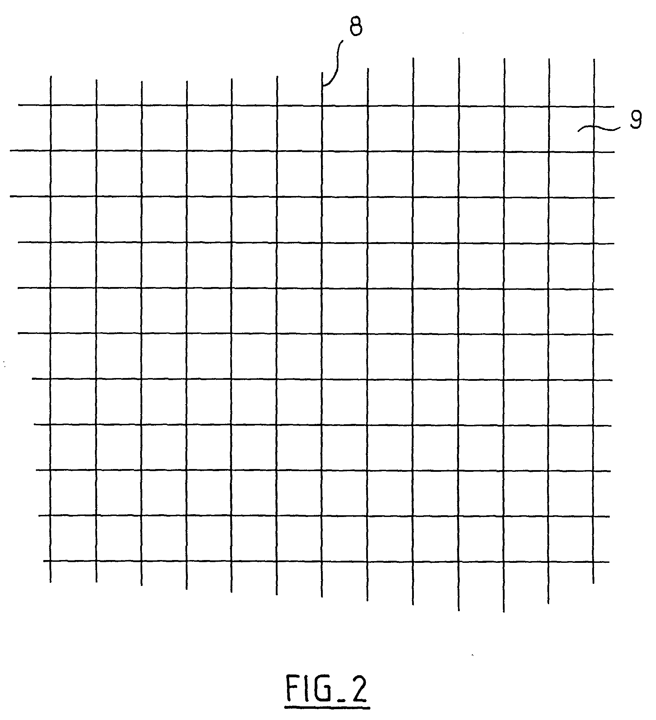

- la figure 2 est une vue schématique de la grille de projection utilisée pour les représentations élaborées avec le procédé de l'invention,

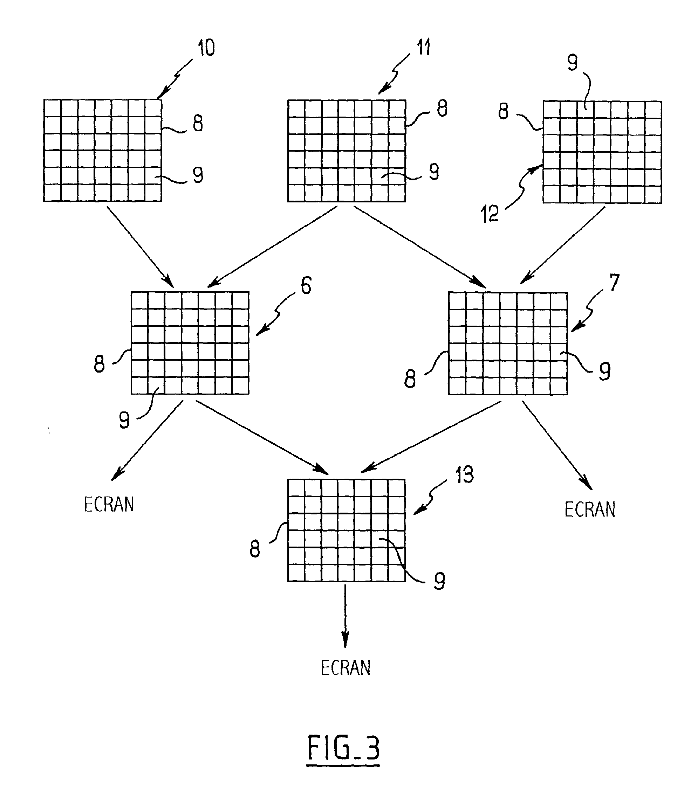

- la figure 3 est une vue schématique des représentations utilisées dans le procédé de l'invention.

Le procédé de détection conforme à l'invention est mis en oeuvre au moyen d'au moins un système radar. En l'espèce, l'invention est décrite en relation avec plusieurs systèmes radar généralement désignés en 1, ici au nombre de deux, et un plus grand nombre de ces systèmes peut être utilisé.

Chaque système radar comprend une antenne 2 qui est agencée de manière connue en soi pour émettre des ondes électromagnétiques sous la forme d'impulsions de durée déterminée. Généralement, les impulsions ont une durée de 2 µs et les impulsions sont espacées d'une durée de 3 ms pour une portée du système radar de 450 km ou de 4 ms pour une portée de 600 km.

L'antenne pivote pendant l'émission des impulsions de sorte que les impulsions sont émises dans des directions 3 formant avec une direction de référence des angles différents appelés azimuts. Il est donc possible d'associer au système radar un repère polaire centré sur le système radar et une grille polaire 4 basée sur ce repère polaire et divisée en cellules 5 ayant un pas radial r égal à, au minimum, une distance parcourue par l'impulsion pendant la moitié de la durée déterminée (ce qui équivaut au pouvoir séparateur en distance du système radar, ou résolution en distance) et un pas angulaire a égal à l'angle séparant les directions d'émission 3 de deux impulsions successives. On remarquera qu'on considère ici que l'angle formé par la direction 3 avec l'horizontale, appelé angle de site, est constant. L'invention s'applique également aux systèmes radars dits multi-sites qui font varier l'angle de site d'un tour à l'autre de l'antenne ou qui émettent des impulsions selon plusieurs angles de site simultanément pour obtenir une couverture de l'espace environnant le système radar et former une représentation en trois dimensions.

L'antenne 2 est également agencée de manière connue en soi pour recevoir des ondes électromagnétiques correspondant à une partie de l'impulsion qui est réfléchie par des obstacles constitués par exemple par des reliefs naturels tels que des montagnes, des reliefs artificiels tels que des immeubles, des phénomènes météorologiques tels que des précipitations comme la pluie, la grêle et autres. Ces ondes électromagnétiques réfléchies sont fournies par le système radar sous la forme d'au moins un signal numérique comportant au moins une suite de valeurs représentatives d'une caractéristique radar ici l'intensité des ondes reçues. Chaque valeur est ici un niveau d'intensité d'une partie de l'onde électromagnétique réfléchie et correspond à un azimut et une distance au système radar et plus particulièrement ici à une cellule 5 de la grille polaire 4. Une fois représentées dans une image radar, ces valeurs seront appelées échos et seront représentatives d'un obstacle.

Le procédé de détection d'obstacles conforme à l'invention comprend l'étape préalable de calculer, de manière connue en elle-même, des écarts-types correspondant aux niveaux d'intensité du signal numérique. Ces écarts-types seront utilisés par la suite pour distinguer les échos fixes correspondant à une onde réfléchie par un relief naturel ou artificiel des échos variables correspondant à une onde réfléchie notamment par les précipitations.

Le procédé comprend ensuite l'étape d'élaborer une représentation 6 des niveaux d'intensité et l'étape d'élaborer une représentation 7 des écarts-types correspondant aux niveaux d'intensité.

Les représentations sont basées sur une grille 8 associée ici à un repère cartésien et divisée en cellules 9. La grille 8 est à une échelle telle que les cellules 9 sont carrées et ont des côtés correspondant à une longueur supérieure ou égale à la résolution en distance du système radar, par exemple 1 km. Les grilles de chaque représentation se présentent par exemple sous la forme de matrices exploitables par un système informatique. Le repère utilisé est cartésien car il est ainsi plus facilement exploitable par les utilisateurs du procédé mais le repère peut être de tout type et notamment polaire centré sur une origine ne correspondant pas au système radar. En outre, dans le cas des systèmes radars multi-sites, le repère et la grille correspondante peuvent être tridimensionnels. Dans le procédé de l'invention, la grille 8 est avantageusement commune aux deux systèmes radars considérés. On peut également avoir une grille 8 pour chaque système radar mais il sera alors nécessaire d'assembler les unes aux autres les grilles 8 correspondant aux systèmes radars pour obtenir une représentation globale.

L'établissement de la représentation 6 comprend une phase d'affecter chaque niveau d'intensité à une cellule correspondante 9 de la grille 8 pour former une représentation 10 des niveaux d'intensité dans laquelle chaque cellule 9 contient la somme des niveaux d'intensité qui lui ont été affectés. L'affectation est réalisée en calculant, pour chaque niveau d'intensité, les coordonnées, dans le repère cartésien de la grille 8, du centre de la cellule 5 correspondant au niveau d'intensité en question et en ajoutant ce niveau d'intensité aux niveaux d'intensité déjà contenus dans la cellule 9 correspondant aux coordonnées du centre de la cellule 5. L'affectation est donc une opération relativement simple.

Il est parallèlement réalisé une représentation 11 du nombre de niveaux d'intensité affectés à chaque cellule 9. La représentation 11 est basée sur une grille 8 dont chaque cellule 9 contient le nombre de niveaux d'intensité affectés à cette cellule, ce nombre étant incrémenté à chaque nouvelle affectation.

Ces deux représentations 10 et 11 sont ensuite mises en relation pour calculer la moyenne des niveaux d'intensité affectés à chaque cellule 9 afin d'obtenir la représentation 6 dont chaque cellule 9 contient la moyenne des niveaux d'intensité qui lui ont été affectés.

L'établissement de la représentation 7 comprend une phase d'affecter chaque écart-type correspondant à un niveau d'intensité à une cellule correspondante 9 de la grille 8 pour former une représentation 12 des écarts-types dans laquelle chaque cellule 9 contient la somme des écarts-types qui lui ont été affectés. L'affectation est réalisée en calculant, pour chaque écart-type, les coordonnées, dans le repère cartésien de la grille 8, du centre de la cellule 5 correspondant à l'écart-type en question et en ajoutant cet écart-type aux écarts-types déjà contenus dans la cellule 9 correspondant aux coordonnées du centre de la cellule 5.

Les représentations 12 et 11 sont ensuite mises en relation pour calculer la moyenne des écarts-types affectés à chaque cellule 9 afin d'obtenir la représentation 7 dont chaque cellule 9 contient la moyenne des écarts-types qui lui ont été affectés.

Les représentations 6 et 7 peuvent être affichés sur un écran ou imprimées puis être utilisées telles qu'elles pour localiser les phénomènes météorologiques.

Le procédé conforme à l'invention comprend ici l'étape ultérieure d'élaborer une représentation 13 des niveaux d'intensités sans écho fixe. La représentation 13 est comme précédemment basée sur une grille 8 et est obtenue par la mise en relation des représentations 6 et 7 afin d'obtenir par comparaison une élimination des échos fixes. Le principe d'élimination des échos fixes est connu en lui-même et repose sur la constatation que les cellules correspondant à des échos fixes ont un écart-type inférieur à un seuil prédéterminé alors que les cellules correspondant à des échos variables ont un écart-type supérieur à ce seuil. Appliqué au procédé conforme à l'invention, ce principe aboutit à diminuer le niveau d'intensité de chaque cellule 9 de la représentation 6 d'une valeur dépendant de l'écart-type contenu dans la cellule correspondante de la représentation 7. On obtient ainsi la représentation 13 correspondant à la représentation 6 corrigée.

On notera qu'il existe, lors de ce filtrage des échos fixes, un risque que des échos correspondant à des phénomènes météorologiques de faible intensité soient atténués. La visualisation des représentations 6, 7 et 13 permet de vérifier directement la qualité de cette dernière.

Les représentations 6, 7 et 13 peuvent être utilisées sous forme d'images par l'intermédiaire d'un écran vidéo par exemple, l'intensité lumineuse des cellules 9 ou leur couleur étant fonction du niveau d'intensité qui leur est associé. Les représentations 6, 7 ou 13 peuvent être construites à partir d'un seul ou de plusieurs tours d'antenne. Les grilles 8 correspondant aux représentations 6, 7, 10, 11, 12, 13 utilisées dans le procédé de l'invention sont remises à zéro au début de l'élaboration de chaque représentation 6, 7 et 13.

La projection directe des suites de valeurs des signaux numériques dans la grille 8 avant la réalisation d'un traitement de celles-ci permet d'obtenir des représentations précises et fidèles, à la projection près, aux signaux numériques radar, limitant ainsi une atténuation des échos, ainsi qu'un décalage et un étalement de ceux-ci, qui se produisent dans les procédés antérieurs dans lesquels des groupements de valeurs par cellules polaires sont réalisés avant la projection.

De plus, les variations de la vitesse de rotation de l'antenne n'ont pratiquement aucune incidence sur ce mode d'élaboration des représentations, ce qui permet de s'affranchir des inconvénients liés à de telles variations comme les oscillations de localisation et d'intensité, en particulier des échos fixes, qui surviennent avec les procédés de l'art antérieur. Il en est de même de la durée des impulsions et de leur espacement qui n'influent pas sur le mode d'élaboration des représentations.

En outre, le procédé peut être mis en oeuvre par un programme informatique ayant une structure simple rendant sa maintenance aisée. Ce programme est par exemple exécuté par un ordinateur associé aux systèmes radars.

Bien entendu, l'invention n'est pas limitée au mode de mise en oeuvre décrit mais englobe toute variante comprise dans le cadre de l'invention tel que défini par les revendications.

En particulier, le procédé conforme à l'invention est utilisable en relation avec d'autres caractéristiques radars comme une fréquence DOPPLER, des paramètres associés à un système double polarisation (Z_{H}, Z_{V}, Kdp, ϕdp...).

En outre, en variante, on peut prévoir de tenir compte de champs d'advection pour corriger l'image finale des mouvements de cellules pluvieuses qui ont lieu durant la durée d'un tour d'antenne. Ceci en associant à des cellules 9 de la grille 8 ou à des groupes de cellules 9 des vecteurs de vitesse de déplacement des échos associés. Les vecteurs de vitesse sont déterminés de façon connue en elle-même par comparaison de deux représentations antérieures espacées d'une durée déterminée. Dans ce cas, par exemple lorsqu'une représentation est réalisée à la fin de chaque tour d'antenne, au moment de l'affectation d'une valeur dans une cellule 9, le vecteur de vitesse de déplacement associé à cette cellule est pris en compte pour déterminer à quelle cellule 9 correspondra cette valeur à la fin du tour d'antenne et la valeur est affectée à cette dernière cellule. Il est également possible d'effectuer une représentation à caractère prédictif pour un utilisateur donné en prenant en compte, au moment de l'affectation des valeurs dans les cellules 9, le vecteur de déplacement associé à ces cellules pour déterminer à quelles cellules 9 correspondront ces valeurs au moment où l'utilisateur disposera de l'image (en tenant compte de la durée séparant l'instant de l'affectation et celui de la prise de connaissance par l'utilisateur de la représentation, une fois celle-ci terminée), puis en affectant ces valeurs aux cellules ainsi déterminées. Le procédé conforme à l'invention permet une prise en compte particulièrement simple du champ d'advection.

## Revendications

1. Procédé de détection d'obstacles par au moins un système radar (1) qui est associé à un repère polaire centré sur le système radar et est agencé pour émettre des impulsions et pour, lorsqu'une impulsion est réfléchie par au moins un obstacle, fournir un signal correspondant, **caractérisé en ce qu'**il comprend l'étape d'établir dans une grille de projection (8), selon un repère différent du repère polaire du système radar, une représentation d'au moins une suite de valeurs qui sont liées au signal fourni par le système radar et correspondent à au moins un azimut et une distance au système radar dans le repère polaire de celui-ci, et **en ce que** l'établissement de la représentation comprend une phase d'affecter chaque valeur à une cellule correspondante (9) de la grille de projection '(8) et une phase de calculer une moyenne des valeurs affectées à chaque cellule.

2. Procédé selon la revendication 1, **caractérisé en ce que**, l'impulsion ayant une durée déterminée et deux impulsions étant décalées d'un angle prédéterminé, une grille polaire (4) est associée au repère polaire du système radar (1) et divisée en cellules (5) ayant un pas radial (r) sensiblement égal à au moins la moitié d'une distance parcourue par l'impulsion pendant la durée déterminée et un pas angulaire (a) sensiblement égal à l'angle prédéterminé de sorte qu'à chaque valeur correspond une cellule (5) de la grille polaire (4), et **en ce que** la cellule correspondante (9) de la grille de projection (8) est déterminée par calcul de coordonnées d'un centre de la cellule (5) de la grille polaire (4) du système radar dans le repère de la grille de projection (8).

3. Procédé selon la revendication 1 ou la revendication 2, **caractérisé en ce que** le repère de projection est un repère de type cartésien.

4. Procédé selon l'une quelconque des revendications 1 à 3, **caractérisé en ce que** la grille de projection (8) est commune à au moins deux systèmes radars (1).

5. Procédé selon l'une quelconque des revendications précédentes, **caractérisé en ce que** la caractéristique radar est une intensité du signal.

6. Procédé selon la revendication 5, **caractérisé en ce que** les valeurs sont des niveaux d'intensités et **en ce que** le procédé comprend l'étape pour chaque cellule (9) de la grille de projection (8) d'ajouter les niveaux d'intensité affectés à la cellule et d'effectuer un comptage de ceux-ci.

7. Procédé selon la revendication 5 ou la revendication 6, **caractérisé en ce que** les valeurs sont des écarts-types calculés à partir de niveaux d'intensité du signal et **en ce que** le procédé comprend l'étape pour chaque cellule (9) de la grille de projection (8) d'ajouter les écarts-types affectés à la cellule et d'effectuer un comptage de ceux-ci.

8. Procédé selon les revendications 6 et 7, **caractérisé en ce qu'**il comprend l'étape d'afficher une représentation (6) des moyennes des niveaux d'intensité et une représentation (7) des moyennes des écarts-types.

9. Procédé selon les revendications 6 et 7, **caractérisé en ce qu'**il comprend une étape d'élaborer une représentation (13) des niveaux d'intensités sans écho fixe par comparaison de la représentation (6) des moyennes des niveaux d'intensité et de la représentation (7) des moyennes des écarts-types.

10. Procédé selon l'une quelconque des revendications précédentes, **caractérisé en ce que**, au moins un vecteur vitesse de déplacement étant associé aux cellules (9) de la grille de projection (8), l'affectation de la valeur comprend les opérations de :
- déterminer une première cellule (9) de la grille de projection (8) correspondant à un instant donné à la valeur à affecter,
- déterminer, à partir du vecteur vitesse de déplacement associé à la première cellule, une deuxième cellule correspondant, après une durée déterminée à compter de l'instant donné, à la valeur à affecter,
- affecter la valeur à la deuxième cellule.
